# EUROPEAN PATENT APPLICATION

(11) **EP 2 230 321 A1**
(43) Date of publication of application: **22.09.2010**
(21) Application number: 09155756.1
(22) Date of filing: 20.03.2009
(51) Int. Cl.: C22B 11/00, C22B 5/00, B22F 1/00

(54) **Process for the preparation of supported metal nanoparticles**

(71) Applicant: Unilever PLC, 100 Victoria Embankment London, Greater London EC4Y 0DY (GB)
(72) Inventor: da Silva, Ana Rosa Aires Neto, Wirral, Merseyside CH63 3JW (GB); Unali, Giovanni Francesco, Wirral, Merseyside CH63 3JW (GB)
(74) Representative: Bristow, Stephen Robert

(57) **Abstract**

A process for the preparation of metal nanoparticles supported on a biopolymer substrate, which substrate acts in aqueous solution as reducing and stabilising agent for the metal nanoparticles, the process, comprising the steps of:
a) forming a solution of a salt of the metal
b) dispersing the biopolymer into the metal salt solution
c) optionally, adding a co-reducing agent to the metal salt solution
c) irradiating the metal salt solution with microwaves for 1 to 15 minutes, thereby to deposit metal nanoparticles onto the biopolymer.

## Description

This invention relates to a process for the preparation of metal nanoparticles supported on a biopolymer substrate, which substrate acts in aqueous solution as reducing and stabilising agent for the metal nanoparticles, in particular it relates to the deposition of metal nanoparticles onto a biopolymer dispersed in an aqueous solution of a salt of the metal.

### BACKGROUND

Various proposals have been made to incorporate biopolymers into liquid compositions. Biopolymers are very abundant naturally occurring, or easily derived from naturally occurring, chemicals and their use in consumer products, such as liquid detergent formulations, is attractive from both environmental and cost grounds. Accordingly, they have been proposed for several applications in such compositions, including thickening or other rheological duties. One problem associated with aqueous compositions containing natural materials, such as biopolymers is their susceptibility to microbial attack. It is thus necessary or desirable to add a biocide to such compositions.

Certain metal nanoparticles are known to exhibit biocidal properties under certain conditions. However, the synthesis of metal nanoparticles has often used undesirable toxic reducing agents such as hydrazine or sodium borohydride.

Such chemistry is not consistent with a move to environmentally friendly or natural compositions.

First row transition metal nanoparticles are often prepared by hydrolysis/thermolysis of the corresponding metal salts at high temperatures. A stabilising and/or capping agent such as polyvinyl pyrrolidone (PVP) is often used to prevent particle agglomeration and to control growth.

Preparation of metal nanoparticles using "Green Chemistry" principles has been proposed. However, the kinetics of these systems is relatively slow.

Generally, deposition processes for metal nanoparticles have been done by prolonged thermal infusion, possibly at high pressure.

Biopolymers, have been proposed as support and/or stabilising agents for metal nanoparticles, but reported processes have poor sustainability. For example, Sodium Borohydride is used as the reducing agent.

Microwave heating is well known for formation of colloidal suspensions of metal nanoparticles. Typical of such disclosures is US2008/0072706 that describes a method for manufacturing copper nanoparticles for conductive ink. A solution of copper salt, dispersing agent, reducing agent and an organic solvent is heated to 30 to 50°C and agitated.

Then it is irradiated with microwaves and copper nanoparticles are obtained on cooling. The ratio of dispersing agent/stabilising agent (PVP) to copper salts is controlled to ensure that the metal nanoparticles are created in a free colloidal form.

J. Chen., J. Wang, X. Zhang and Y. Jin, Mater. Chem. Phys., 2008, 108, 421 discloses the preparation of uniform (15 nm) and stable silver nanoparticles using Sodium Carboxymethyl cellulose (SCMC) as reducing and stabilising agent to prevent agglomeration or sintering of the nanoparticles. Microwave heating was used. The authors claimed that the reducing agent was the hydrolysed SCMC, which was produced by the microwave irradiation. The end product of this process is thus a colloidal dispersion of metal nanoparticles, which cannot be said to be supported on a biopolymer substrate.

Fast, environmentally friendly, processes using microwave heating and starch as protecting/capping agent for the synthesis of colloidal silver nanoparticles in water using D-glucose are reported by Raveendran, J. Fu and S.L. Wallen, in Green Chem., 2006, 8, 34; and by P. Raveendran, J. Fu and S.L. Wallen, in J. Am. Chem. Soc., 2003, 125, 13940.

M. Tsuji, M. Hashimoto, Y. Nishizawa, M. Kubokawa and T. Tsuji, Chem. Eur. J., 2005, 11, 440, produced silver nanoparticles by alcohol reduction of fatty acid silver salts using microwaves for 1-5 min at 140-157°C.

However, the prior art use of microwaves, whilst being effective at producing colloidal dispersions of metal nanoparticles, does not solve the problem of an improved and environmentally benign process for deposition of metal nanoparticles onto a substrate in a way that enables their subsequent slow release.

WO2005/087979 describes a microwave process for depositing metal nanoparticles onto a substrate to effect plating of the substrate. A separate reducing system is needed. This process appears to be very aggressive and to fix the nanoparticles to the substrate permanently.

Thus, although the prior art has many examples of formation of colloidal suspensions by microwave heating, it appears that other processes involving heat, pressure and reagents with high environmental impact are favoured when deposition onto a substrate is intended.

There is an unmet need for a process for the preparation of metal nanoparticles supported on a biopolymer substrate that avoids these disadvantages, and for a product of such a process that releases biocidal nanoparticles to a composition comprising the product.

### SUMMARY OF THE INVENTION

According to the present invention there is provided a process for the preparation of metal nanoparticles supported on a biopolymer substrate, which substrate acts in aqueous solution as reducing and stabilising agent for the metal nanoparticles, the process, comprising the steps of:
a) forming a solution of a salt of the metal; and
b) dispersing the biopolymer into the metal salt solution formed in step a),
c) optionally, adding a soluble co-reducing agent to the metal salt solution,
d) irradiating the metal salt solution with microwaves for 1 to 15 minutes, thereby to deposit metal nanoparticles onto the biopolymer.

In step b) the biopolymer, preferably a polysaccharide, acts as reducing and stabilising agent for the metal nanoparticles and ultimately works as support/substrate for the nanoparticles. Therefore, there is no need to use the optional co-reducing agents, but their use in addition to the biopolymer is not excluded. However, it is preferred to avoid aggressive co-reducing agents, such as Sodium Borohydride. When a co-reducing agent is used, it should be added as late into the process as possible in order that it reacts as little as possible with the metal salt before it is irradiated with the microwaves.

The invention also comprises a dried biocidal substrate produced by the process wherein the final dry base metal/biopolymer weight ratio is from 0.7:100 to 23:100. It further comprises a product produced by the process, which is in undried form.

The invention also includes a use of a product as made by the process for the slow release of silver nanoparticles into an aqueous composition, the biopolymer surface acting as a reservoir for metal nanoparticles.

### DEFINITIONS

Biopolymer: A biopolymer is a naturally occurring polymer or a polymer derived from naturally occurring material, for example a functionalised cellulose. Suitable biopolymers include polysaccharides such as microcrystalline cellulose, acetyl cellulose, and chitin.

Metal nanoparticles: A metal nanoparticle is a metal in its elemental or oxidised state and having a particle size less than 100 nm.

Substrate: A substrate is a solid biopolymer with a particle size of greater than 1, preferably greater than 2 micrometres. It may be in particulate, fibrous, film or any other solid form of the required size.

Reducing agent: A reducing agent, or reductant, is a biopolymer that will oxidise to reduce a metal salt to metal nanoparticles. It may be insoluble or soluble in water.

Co-reducing agent: A soluble reducing agent, preferably other than a biopolymer.

### The Substrate

The substrate is a biopolymer, preferably a polysaccharide. Chitin and cellulose derivatives, such as acetyl cellulose are preferred. Microcrystalline cellulose (MCC) is especially preferred.

The biopolymer needs to act as a reducing agent and also acts as a substrate (support). As such it may be distinguished from the prior art use of biopolymer for stabilisation. It is suitably dispersed in water in an amount of from 0.1 to 10wt%, for example 0.3 to 4wt%, or even 0.7 to 2 wt%, preferably about 1wt%.

The preferred biopolymers are essentially insoluble in water and form suspensions.

### The Metal

The metal comprising the metal nanoparticles is preferably chosen from the group consisting of Ag(I), Zn(II), Cu(II), Au(III) and Pt(IV) and the corresponding metal salts selected from the group: acetate, and its derivatives, nitrates or halides. However, other metals and their salts, while less preferred, may be used. The process is applicable to the production of supported nanoparticles of more economical transition metals, such ZnO, Cu, CuO and Cu₂O, as well as to precious metals such as silver, gold and platinum. The preferred metal is silver, due to its excellent biocide properties. Zinc nanoparticles (ZnO) also have very good biocidal properties.

### The aqueous solvent

The aqueous solvent is preferably 100% water. However, some ethanol can be added as a wetting agent for less hydrophilic biopolymers. Ethanol or a similar environmentally acceptable water miscible co-solvent is typically used as a wetting-out agent and not for solubility reasons.

Some cellulose derivatives, such as acetyl cellulose are less hydrophilic than microcrystalline cellulose and form less homogeneous in colour materials with metal nanoparticles. When ethanol is used as a co-solvent, very homogeneous materials are obtained because acetyl cellulose is also partially soluble in ethanol. The desirable biopolymer and solvent pairings are MCC, and chitin as biopolymers with water as solvent and acetyl cellulose as biopolymer with ethanol water mixtures as solvent.

### The co-reducing agent

Use of a co-reducing agent is not preferred. However, if it is necessary or desirable for kinetic reasons to use one then any of the conventionally employed reducing agents used for formation of colloidal metal nanoparticles is suitable. In particular, Sodium Borohydride or hydrazine may be tolerated at low levels because they are strong reducing agents and they are soluble in water. By low levels is meant less than 10% based on biopolymer, preferably less than 5%

### Ratios of metal and biopolymer

The metal to biopolymer weight ratios may vary from 0.7:100 to 23:100. This means that a different ratio is used from that used to obtain colloidal suspensions of metal nanoparticles. For that purpose, the reducing agent is normally used in slight excess to the metal and a maximum of about 1:2 molar ratio.

### Microwave heating

An essential part of the process is the exposure of the biopolymer and the metal salt to microwave radiation during the time that the metal salt is reduced and the biopolymer correspondingly partially oxidised. Microwaves are an energy efficient heating method. The microwave heating is applied for 1 to 15 minutes. The aqueous solution can be preheated by conventional heating. We have found that use of microwave heating during the formation and deposition of the metal nanoparticles increases the yield of deposited particles as well as increasing the kinetics of the process.

The microwave heating is applied to the mixture for 1 to 15 minutes with a power above 150 W in order to obtain temperatures 130 to 150 °C or higher, even up to 200 °C.

A suitable microwave equipment is 24 position CEM Explorer reactor operating at a frequency of 2.45 GHz with a single mode resonant cavity and an infrared temperature sensor. The power of the microwave is typically set to 150W or more and the power per unit volume is then typically at least 21 W /cm³.

The extent of deposition of the metal onto the biopolymer substrate can be controlled by the concentration of the ionic metal solution, which also seems to be an important factor in the release rates of the metal nanoparticles into solution. Microwaving time was found to affect nanoparticle size.

### Obtaining the supported nanoparticles

The supported nanoparticles are obtained by the end of the microwave heating period. They may be separated from the liquid phase using an additional freeze-drying step after the microwave heating. If freeze drying is not used it is possible to separate insoluble biopolymer supported metal nanoparticles by centrifugation or other conventional separation processes. Biopolymer substrate supported nanoparticles are obtained in preference to the prior art colloids by careful selection of the biopolymer to be insoluble. Adjustment of ratio of the metal salt/ reducing agent will affect the extent of deposition.

The mean nanoparticle size may be controlled by microwaving time and by the metal salt concentration in solution. Generally, the mean crystallite size increases with increasing microwaving time and metal salt concentration. In the case of silver, the mean crystallite sizes determined by XRD were in the range of 5 to 22 nm, which correlated well with the sizes of released nanoparticles obtained by TEM. The mean crystallite sizes obtained by XRD for the other precious metals and ZnO were slightly higher than the ones obtained for silver and in the range of 22 to 40 nm and of 44 to 58 nm for Cu₂O. Hence, all of the metal nanoparticles obtained by this clean and simple method were of nanometre size. On the other hand, the supporting biopolymers are larger than 1 micron, preferably larger than 2 micron and even over 5 micron in size.

### Use of the Supported metal nanoparticles

Metal nanoparticles were shown to be slowly released into solution from the biopolymer substrates. The biopolymer surface seems to act as a reservoir for the nanoparticles that are slowly released into solution. The silver and zinc metal nanoparticle based materials were found to have antimicrobial activity against *E. Coli.*

The invention will now be further described with reference to the following non-limiting examples and with reference to the drawings, of which:
Fig. 1 is the XRD pattern of silver metal nanoparticles deposited onto MCC by microwaves with 3.2 wt% loading and mean crystallite size of 7 nm.

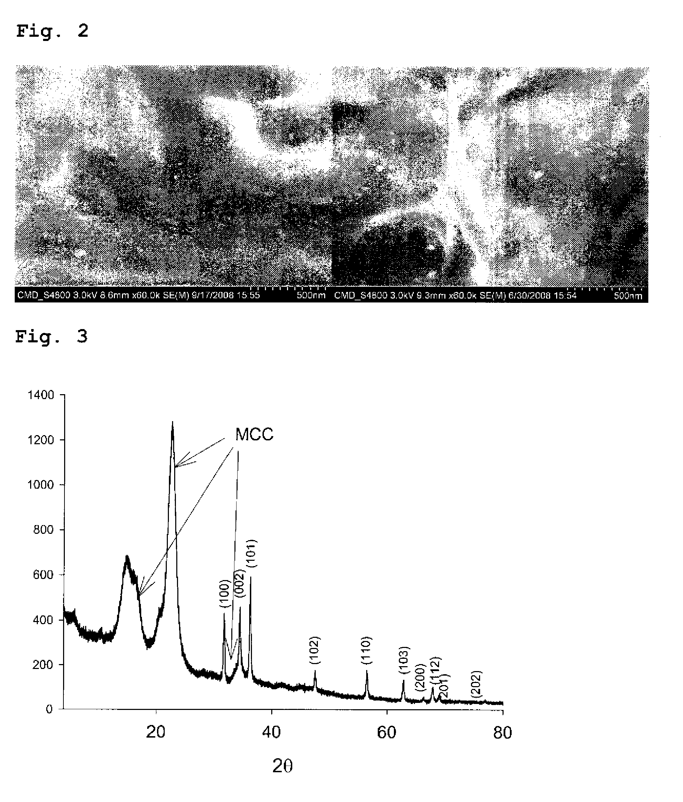

Fig. 2 is SEM micrographs of two materials containing almost spherical nanoparticles deposited by microwaves onto the surface of MCC: (left) with 3 wt% silver/MCC loading and 7 nm mean crystallite size obtained by XRD and (right) 9 wt% and 12 nm.
Fig. 3 is the XRD pattern of ZnO nanoparticles deposited onto the surface of MCC by microwaves and with 3.7 wt% metal loading and mean crystallite size of 33 nm.
Fig. 4 is the XRD pattern of CuO nanoparticles deposited onto the surface of MCC by microwaves and with 0.7 wt% metal loading and mean crystallite size of 15 nm.

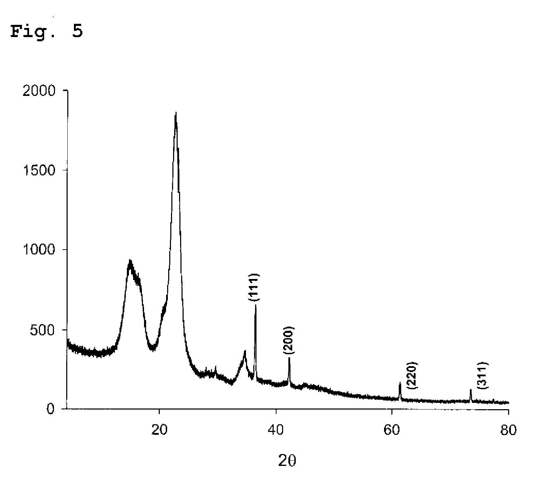

Fig. 5 is the XRD pattern of Cu₂O nanoparticles deposited onto the surface of MCC by microwaves with 1.4 wt% metal loading and mean crystallite size of 44 nm.

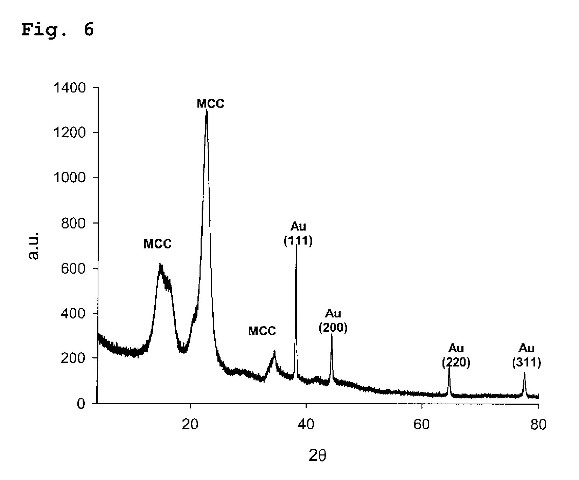

Fig. 6 is the XRD pattern of Au nanoparticles deposited onto the surface of MCC by microwave with 1.5 wt% metal loading and mean crystallite size of 33 nm.
Fig. 7 is the XRD pattern of Pt nanoparticles deposited onto the surface of MCC by microwaves with 12.3 wt% metal loading and mean crystallite size of 22 nm.
Fig. 8 shows a representative TEM micrograph (copper grid) showing silver nanoparticles released from MCC when placed in water for 168 hours.

In the examples, the following chemicals were used. All chemicals were purchased from Sigma-Aldrich and used as received. Data relating to the examples is given in table 1.

### Metal salts

- Agac =: Ag(I) acetate 99%,
- Zn(ac)₂ =: Zn(II) acetate dihydrate 99.0%,
- Cu(ac)₂ =: Copper(II) acetate monohydrate 99.0%,
- CuSO₄ =: Copper(II) sulphate pentahydrate 99.0%,
- HAuCl₄ =: Au(III) chloride hydrate p.a. (≥49% Au basis)
- H₂PtCl₆ =: Hexachloroplatinic acid hexahydrate (≥37.50% Pt basis)

### Biopolymers

- MCC =: Microcrystalline cellulose
- Acetylcell =: acetyl cellulose
- Chitin =: chitin

### EXAMPLES 1 to 11

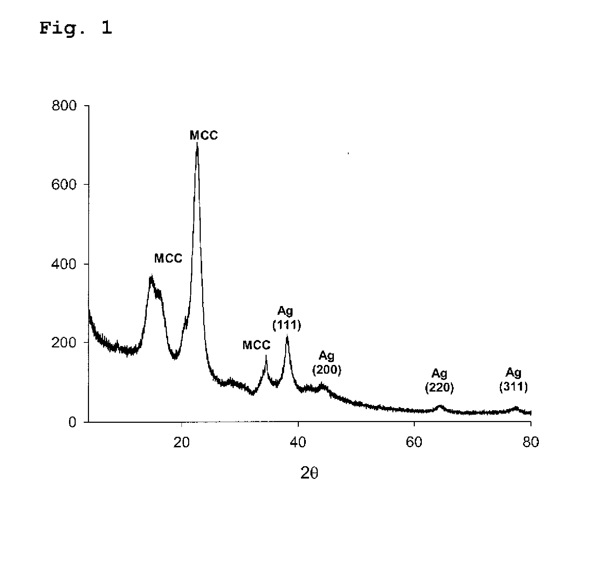

Microcrystalline cellulose (70 mg) was microwaved under stirring at 150 W and 150°C for 1 to 15 minutes in 10 ml sealed tubes with 7 ml of aqueous silver(I) acetate solution of concentrations ranging from 7x10⁻⁴ to 3x10⁻² mol dm⁻³. The solution was decanted and the solid was freeze dried to give yellow to brown materials. The obtained silver/biopolymer weight ratios were in the range of 0.7 to 23% and the mean crystallite size obtained by applying the Scherrer equation to the Ag {111} peak of the XRD pattern (Fig. 1) was in the range of 5 to 22 nm, depending on the microwaving time and silver(I) acetate concentration.

The XRD patterns in Fig 1, confirm the presence of metallic silver on the MCC biopolymer substrate. Moreover, the peaks due to silver in the XRD pattern are broadened which is typical of the presence of crystallites of nanometre size.

### COMPARATIVE EXAMPLE A

Comparative Example A did not use any microwave heating. Instead, conventional heating to 100°C was used. Under conventional heating, the reducing process took 3 hours and a considerably smaller quantity of silver nanoparticles was formed on the microcrystalline cellulose. It is noteworthy that in this control experiment using conventional heating (100°C) TGA showed that it contained only 0.4% of silver after 3 hours of reflux and by XRD, no peaks typical of nanoparticles of Ag could be detected. This example shows that microwave heating is a faster and more efficient process than conventional heating for the deposition of metal nanoparticles onto a biopolymer used as reducing and stabilising agent.

### EXAMPLE 12

Acetyl cellulose (70 mg) was microwaved under stirring at 150 W and 150°C for 1 minute in a 10 ml sealed tube with 7 ml of a 3x10⁻³ mol dm⁻³ aqueous silver(I) acetate aqueous/ethanolic solution (1/7 volume). The solution was decanted and the solid was freeze dried to give a brown material. The silver/biopolymer weight ratio was of 3% and the mean crystallite size obtained by applying the Scherrer equation to the Ag {111} peak of the XRD pattern was 10 nm.

### EXAMPLE 13

This shows the use of a further alternative biopolymer. The process is similar to that in example 1 adapted as shown in table 1. Chitin, the second most abundant biopolymer after cellulose, also acted as reducing, stabilising and supporting agent for silver nanoparticles (0.9% weight). The loading was 3% and the mean crystallite size of 8 nm is comparable to the ones obtained with MCC.

### EXAMPLE 14

Microcrystalline cellulose (70 mg) was microwaved under stirring at 150 W and 200°C for 8 minutes in a 10 ml sealed tube with 7 ml of a 2x10⁻³ mol dm⁻³ hexachloroplatinic acid hexahydrate aqueous solution. The microwaving temperature had to be increased to 200°C, which may be attributed to the higher oxidation-reduction potential of ionic platinum to metal when compared to ionic gold or silver.

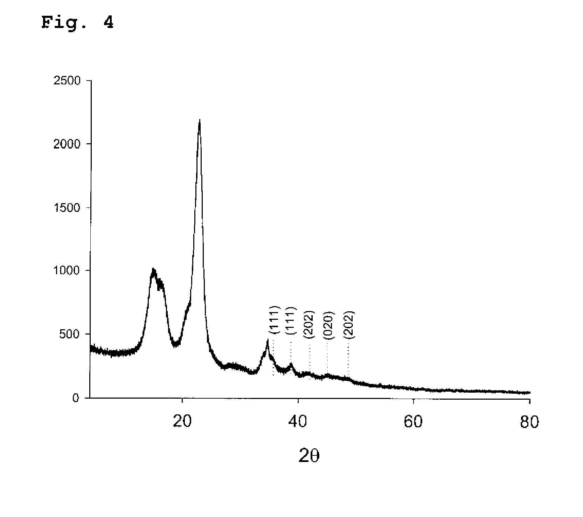

The solution was decanted and the solid was freeze dried to give a black material. The platinum loading on the biopolymer substrate was 12% of the substrate weight and the mean crystallite size obtained by applying the Scherrer equation to the Pt {111} peak of the XRD pattern (Fig. 4) was 22 nm.

### EXAMPLES 15 to 19

These show the use of the process for other metals and salts. The process is similar to that in example 14 adapted as shown in Table 1.

Microwaving for 8 minutes under the same experimental conditions an aqueous solution of zinc salt with MCC under alkaline media deposits a white material whose XRD pattern is typical of ZnO nanoparticles, onto the MCC surface, with 5% ash weight (TGA). Microwaving an aqueous solution of copper(II) salt in neutral media yields light brown materials with an XRD pattern typical of CuO and with 0.9% ash weight (TGA), whereas if the media is alkaline dark pink materials are yielded with an XRD pattern typical of Cu or Cu₂O the latter one with 2% ash weight (TGA). The peaks from the XRD of these materials also show broadening when compared to the reference indicating that the particles are of nanometre size. Applying the Scherrer equation to the most intense peak in these patterns gives mean crystallite sizes of slightly higher dimensions than the ones obtained with the silver nanoparticles under comparable conditions, but still in the range 15 to 44 nm. Gold was also deposited onto MCC using this process.

**Table 1**

| **Ex** | **[M⁺] (mol dm⁻³)** | **Metal Salt** | **Biopolymer** | **t_{MW} (min)** | Colour | **M/Bio_{TGA} (% weight)¹** | **XRD (nM)²** |
|---|---|---|---|---|---|---|---|
| 1 | 2.9x10⁻³ | Agac | MCC | 1 | brown | 3.2 | Ag (7) |
| 2 | 2.9x10⁻³ | Agac | MCC | 15 | brown | 3.2 | Ag (8) |
| 3 | 7.2x10⁻⁴ | Agac | MCC | 1 | orange | 0.7 | Ag (5) |
| 4 | 7.2x10⁻⁴ | Agac | MCC | 15 | greenish | 0.8 | Ag (22) |
| 5 | 1.8x10⁻³ | Agac | MCC | 8 | brown | 2.6 | Ag (13) |
| A | 2.9x10⁻³ | Agac | MCC | 240 | salmon | 0.4 | |
| 6 | 2.8x10⁻² | Agac | MCC | 1 | dark brown | 22.0 | Ag (12) |
| 7 | 2.8x10⁻² | Agac | MCC | 15 | dark brown | 22.6 | Ag (16) |
| 8 | 2.9x10⁻³ | Agac | MCC | 1 | brown | 2.4 | Ag (6) |
| 9 | 2.9x10⁻³ | Agac | MCC | 15 | brown dark | 2.7 | Ag (6) |
| 10 | 9.4x10⁻³ | Agac | MCC | 8 | brown | 9.2 | Ag (12) |
| 11 | 2.8x10⁻³ | Agac | MCC | 1 | brown | 2.5 | Ag (5) |
| 12 | 2.8x10⁻³ | Agac | Acetylcell | 1 | brown | 2.9 | Ag (10) |
| 13 | 2.8x10⁻³ | Agac | chitin | 1 | brown | 0.9 | Ag (8) |
| 14 | 1.8x10⁻³ | H₂PtCl₆ | MCC | 8 | black | 12.3 | Pt (22) |
| 15 | 1.8x10⁻³ | HAuCl₄ | MCC | 8 | light pink | 1.5 | Au (33) |
| 16 | 1.7x10⁻² | Zn(ac)₂ | MCC | 8 | white | 3.7 | ZnO (33) |
| 17 | 1.8x10⁻³ | Cu(ac)₂ | MCC | 8 | light brown | 0.7 | CuO (15) |
| 18 | 1.8x10⁻³ | Cu(ac)₂* | MCC | 8 | pink | 1.4 | CU₂O (44) |
| 19 | 1.8x10⁻³ | CuSO₄* | MCC | 8 | pink | 1.2 | CU₂O (58) |

| | | | | | | | |
|---|---|---|---|---|---|---|---|
| * In alkaline media (NaOH) ¹ weight ratio of metal per amount of biopolymer loaded into the solution in the beginning of the experiment; Determined from the ash weight in air atmosphere at 550°C and taking into account only the metal part if the nanoparticle is an oxide as determined by XRD. ² Crystal salt pattern and respective mean crystallite size, obtained by applying the Scherrer equation to the data from {111} peaks in the case of Ag, Au, CuO and Cu₂O crystals and {101} in the case of ZnO crystal. | | | | | | | |

### EXAMPLE 20 - release of the nanoparticles in solution

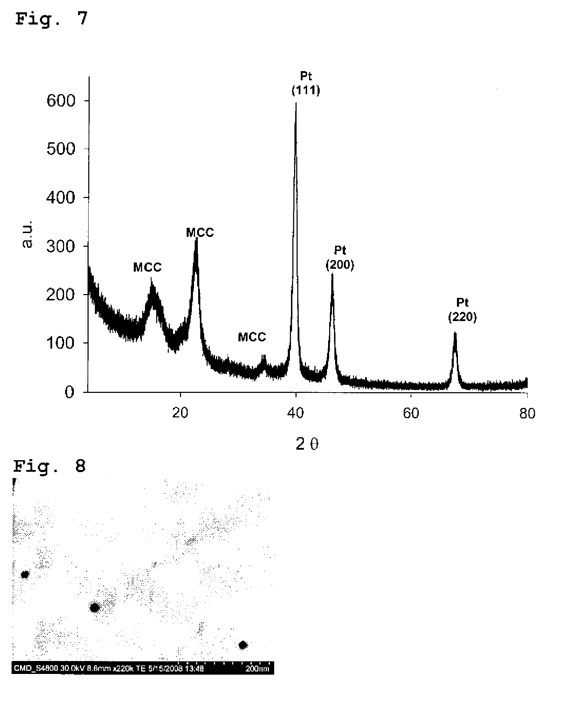

Some selected materials (2 mg) from examples 1 to 11 were placed in milipore water and aliquots of the solution were periodically taken and analysed by ICP-AES or silver selective electrode and by SEM-TE. The results showed the presence of silver in solution, released at a slow rate, which was found to depend on the silver loading onto MCC. By SEM-TE the presence of nanoparticles was observed in these solutions as can be seen in Fig 8. The metal nanoparticle sizes observed agree well with the mean crystallite sizes obtained by XRD. Therefore, the MCC surface seems to act as a reservoir for the nanoparticles that are slowly released into solution. This release starts very quickly (hours) and continues for an extended period of time (days). The reservoir of particles that can be released is enough for several years of steady slow release.

### Example 21 - Biocidal Efficacy

Silver metal nanoparticle materials as well as Zinc Oxide metal nanoparticle materials showed antimicrobial activity in 18 hours against *E. Coli,* and will have an even higher antimicrobial activity against Gram positive bacteria.

## Claims

1. A process for the preparation of metal nanoparticles supported on a biopolymer substrate, which substrate acts in aqueous solution as reducing and stabilising agent for the metal nanoparticles, the process, comprising the steps of:
a) forming a solution of a salt of the metal
b) dispersing the biopolymer into the metal salt solution
c) optionally, adding a co-reducing agent to the metal salt solution
c) irradiating the metal salt solution with microwaves for 1 to 15 minutes, thereby to deposit metal nanoparticles onto the biopolymer.

2. A process according to claim 1 in which the biopolymer is a polysaccharide.

3. A process according to claim 1 or 2 in which no separate co-reducing agent is added to the metal salt solution.

4. A process according to claim 1 in which the biopolymer is selected from the group comprising microcrystalline cellulose, acetyl cellulose, chitin and mixtures thereof.

5. A process according to claim 4 in which the biopolymer comprises microcrystalline cellulose.

6. A process according to any preceding claim in which the metals are selected from the group comprising Ag(I), Zn(II), Cu(II), Au(III) and Pt(IV) and the corresponding salts from the group acetate, and its derivatives, nitrate, halide or sulphate.

7. A process according to claim 6 in which the metal is silver.

8. A process according to any preceding claim in which the concentration of metal salt solution is between 7x10⁻⁴ and 3x10⁻² mol dm⁻³.

9. A process according to any preceding claim in which the concentration of the biopolymer is about lwt% in the solvent.

10. A process according to claim 7 in which the metal/polymer weight ratio in solution is between 0.8:100 and 30:100.

11. A process according to any preceding claim in which the solvent is selected from water, ethanol, and mixtures thereof.

12. A process according to claim 11 in which the solvent is water.

13. A process according to any preceding claim in which the microwaving temperature is from 130°C to 200°C and the microwave power is about 150W or more.

14. A process according to any preceding claim, which further comprises the decantation of the aqueous solution in order to isolate the biopolymer with deposited metal nanoparticles and optional washing/centrifugation with water, and, finally, freeze drying of the material.

15. A dried biocidal substrate produced by the process according to any preceding claim wherein the final dry elemental metal/biopolymer weight ratio is from 0.7:100 to 23:100,

16. A product produced by the process according to any preceding claim, which is in undried form.

17. Use of a product as made by the process according to any of the claims 1 to 14 for the slow release of silver nanoparticles into an aqueous composition, the biopolymer surface acting as a reservoir for nanoparticles.
